# EUROPÄISCHE PATENTSCHRIFT

(11) **EP 3 947 100 B1**
(45) Veröffentlichungstag und Bekanntmachung des Hinweises auf die Patenterteilung: **14.09.2022**
(21) Anmeldenummer: 20710800.2
(22) Anmeldetag: 27.02.2020
(51) Int. Cl.: B61L 15/00, B61L 23/04, G06N 3/08, G06N 20/10

(54) **VERFAHREN UND EINRICHTUNG ZUM ERZEUGEN EINES STATUSSIGNALS**
METHOD AND DEVICE FOR PRODUCING A STATUS SIGNAL
PROCÉDÉ ET DISPOSITIF DE GÉNÉRATION D'UN SIGNAL D'ÉTAT

(30) Priorität: 27.03.2019 DE 102019204269
(43) Veröffentlichungstag der Anmeldung: 09.02.2022
(73) Patentinhaber: Siemens Mobility GmbH, 81739 München (DE)
(72) Erfinder: EVERS, Bernhard, 38116 Braunschweig (DE)
(86) Internationale Anmeldenummer: PCT/EP2020/055123
(87) Internationale Veröffentlichungsnummer: WO 2020/193052

(56) Entgegenhaltungen:
- DE-A1- 10 260 555
- US-A1- 2010 027 841
- SARAH MÖHLE ET AL: "Wie die Bahn sehen lernt: Intelligente Videoanalyse mit Künstlicher Intelligenz - How Deutsche Bahn is learning to see: smart video analysis using artificial intelligence", SIGNAL UND DRAHT: SIGNALLING & DATACOMMUNICATION, Bd. 110, Nr. 7+8, 9. August 2018 (2018-08-09), Seiten 19-22, XP055502225, DE ISSN: 0037-4997

## Beschreibung

Die Erfindung bezieht sich auf Verfahren und Einrichtungen zum Erzeugen eines Statussignals auf der Basis zumindest eines Sensorsignals zumindest eines Sensors.

Mit Hilfe trainierbarer Systeme künstlicher Intelligenz, wie beispielsweise künstlicher neuronaler Netze, können menschliche Lern- und Entscheidungsvorgänge simuliert werden. Bekanntermaßen lassen sich künstliche neuronale Netze aus miteinander verbundenen künstlichen Neuronen bilden. Die Eingänge eines künstlichen Neurons können gewichtet und aufsummiert werden. Abhängig von einer Aktivierungsfunktion können die Ausgänge des jeweiligen künstlichen Neurons aktiviert werden oder nicht.

Ein möglicher Aufbau eines künstlichen neuronalen Netzwerks besteht vorzugsweise aus mehreren Schichten künstlicher Neuronen, die untereinander verschaltet sind, zum Beispiel einer Eingabeschicht (fachsprachlich Input Layer genannt), einer Ausgabeschicht (fachsprachlich Output Layer genannt) sowie einer oder mehreren inneren Schichten (fachsprachlich Hidden Layer genannt).

Künstliche neuronale Netze lernen, indem sie trainiert werden. Dabei werden die erwähnten Gewichte geändert, bis die Ausgabeschicht das gewünschte Ergebnis zeigt. So können beispielsweise Objekte in Bildern identifiziert werden oder Laute Wörtern zugeordnet werden. Es können aber auch Fertigungsstraßen oder der Handel von Wertpapieren optimiert werden.

Nachteilig bei der Anwendung neuronaler Netze ist, dass nicht bestimmt werden kann, ob die Gewichte unter allen möglichen auftretenden Bedingungen geeignet sind, die an sie gestellte Aufgabe zu lösen, d. h. wie gut das künstliche neuronale Netzwerk tatsächlich "gelernt" hat. Damit ist das Verhalten des künstlichen neuronalen Netzwerks nicht vorhersagbar bzw. plausibilisierbar.

Bei Anwendungen, die eine besonders verlässliche Aussage benötigen, wie z. B. sicherheitsrelevante Anwendungen im Bereich der Eisenbahntechnik, hat diese Einschränkung zur Folge, dass die Vorteile von künstlichen neuronalen Netzwerken bislang nicht genutzt werden.

Das Dokument US 2010 027 841 A1 beschreibt ein Verfahren zum Erfassen einer Signalstruktur von einem sich bewegenden Fahrzeug und umfasst das Erfassen eines Bildes von einer Kamera, die an dem sich bewegenden Fahrzeug angebracht ist.

Um fehlerhafte Ergebnisse neuronaler Netze zu vermeiden, sind aus der Literatur folgende Ansätze bekannt:
- Harte Randbedingungen: In diesem Fall wird das lernende künstliche neuronale Netzwerk durch harte, nicht erlernte, Bedingungen überwacht, so dass Ergebnisse außerhalb eines zulässigen Bereiches nicht akzeptiert werden (siehe "Safe, Multi-Agent, Reinforcement Learning for Autonomous Driving", Shai Shalev-Shwartz, Shaked Shammah and Ammon Shashua, arXiv: 1610.03295vl [cs.AI], 11 Oct 2016, Seiten 1-13)
- Gating-Mechanismen (siehe obige Literaturstelle): In diesem Fall werden die internen Zustandsmöglichkeiten des künstlichen neuronalen Netzwerkes eingeschränkt, so dass bestimmte interne Zustände nicht erreicht werden können.
- "Safe lifelong learning control policies": In diesem Fall werden Sicherheitsrandbedingungen verschiedener nacheinander geschalteter bereits angelernter künstlicher neuronaler Netze übergreifend betrachtet, so dass die einzelnen Sicherheitsrandbedingungen im Summe weiterhin geeignet sind (siehe: "Safe policy search for lifelong reinforcement learning with sublinear regret", Haitham Bou Ammar, Rasul Tututnov and Eric Eaton; Proceedings of the 32nd International Conference on Machine Learning, Lille, France, 2015. JMLR: W&CP volume 37. Copyright 2015 by the author(s).

Den genannten Ansätzen ist gemein, dass sie den Bereich, in dem die künstlichen neuronalen Netze fehlerhafte bzw. nicht vorhersagbare Ergebnisse liefern können, (von außen) eingrenzen. Sie sind jedoch nicht in der Lage, künstliche neuronale Netzwerke grundsätzlich bezüglicher ihrer Aussagen zu verifizieren. Gleichzeitig schränken sie den Anwendungsbereich der künstlichen neuronalen Netzwerke ein.

Der Erfindung liegt die Aufgabe zugrunde, ein Verfahren zum Erzeugen eines Statussignals anzugeben, das einfach durchführbar ist, aber dennoch sehr zuverlässige Ergebnisse liefert und einen Einsatz auch in der Eisenbahntechnik erlaubt. Diese Aufgabe wird erfindungsgemäß durch ein Verfahren mit den Merkmalen gemäß Patenanspruch 1 gelöst. Vorteilhafte Ausgestaltungen des erfindungsgemäßen Verfahrens sind in Unteransprüchen angegeben.

Danach ist erfindungsgemäß vorgesehen, dass mit einem ersten trainierbaren System, das auf ein Erkennen einer vorgegebenen Eigenschaft trainiert worden ist, geprüft wird, ob das Sensorsignal des zumindest einen Sensors die vorgegebene Eigenschaft anzeigt, und im Falle, dass die Eigenschaft erkannt wird, ein die Eigenschaft bestätigendes erstes Hilfssignal erzeugt wird, mit zumindest einem zweiten trainierbaren System, das auf ein Erkennen des Nichtvorliegens der vorgegebenen Eigenschaft trainiert worden ist, geprüft wird, ob das Sensorsignal des zumindest einen Sensors oder das Sensorsignal mindestens eines weiteren Sensors, das geeignet ist, dieselbe Eigenschaft anzuzeigen, die vorgegebene Eigenschaft nicht anzeigt, und im Falle, dass das Nichtvorliegen der Eigenschaft festgestellt wird, ein das Nichtvorliegen der Eigenschaft bestätigendes zweites Hilfssignal erzeugt wird, und mit zumindest einer Auswerteinrichtung ein das Vorliegen der Eigenschaft anzeigendes Statussignal erzeugt wird, falls das erste Hilfssignal das Vorliegen der Eigenschaft bestätigt und das zweite Hilfssignal das Nichtvorliegen der Eigenschaft nicht bestätigt, und ein das Nichtvorliegen der Eigenschaft anzeigendes Statussignal erzeugt wird, falls das erste Hilfssignal das Vorliegen der Eigenschaft nicht bestätigt und das zweite Hilfssignal das Nichtvorliegen der Eigenschaft bestätigt.

Ein wesentlicher Vorteil des erfindungsgemäßen Verfahrens besteht darin, dass durch den Einsatz zumindest zweier trainierbarer Systeme, die komplementär arbeiten, das Auswertergebnis des ersten trainierbaren Systems mit dem Auswertergebnis des zweiten trainierbaren Systems überprüft werden kann und die Wahrscheinlichkeit, dass ein korrektes Statussignal erzeugt wird, deutlich erhöht wird.

Bei den trainierbaren Systemen handelt es sich vorzugsweise um One-Class Support Vector Maschinen oder um künstliche neuronale Netze.

Im Falle künstlicher neuronale Netze kann zum Beispiel ein erstes künstliches neuronales Netz darauf trainiert sein, Hindernisse in einem bestimmten Bereich zu erkennen, während das zweite, vom ersten unabhängige künstliche neuronale Netz, darauf trainiert sein kann, dass ein bestimmter Bereich frei von einem Hindernis ist. Die beiden komplementären künstlichen neuronalen Netze haben in diesem Falle unterschiedliche Gewichte und können sich auch in ihrer Topologie unterscheiden.

Bei einer als vorteilhaft angesehenen Verfahrensvariante ist vorgesehen, dass im Rahmen des Verfahrens die Befahrbarkeit eines Streckenabschnitts einer Eisenbahngleisanlage geprüft wird und die vorgegebene Eigenschaft die freie Befahrbarkeit des Streckenabschnitts der Eisenbahngleisanlage betrifft.

Vorteilhaft ist insbesondere, wenn im Rahmen des Verfahrens ein Streckenabschnitt einer Eisenbahngleisanlage auf das Vorhandensein eines Objekts in dem Streckenabschnitt überwacht wird und die vorgegebene Eigenschaft das Vorhandensein des Objekts in dem Streckenabschnitt der Eisenbahngleisanlage betrifft und der Streckenabschnitt als die vorgegebene Eigenschaft aufweisend angesehen wird, wenn ein Objekt in dem Streckenabschnitt erkannt wird. Auch kann durch eine geeignete Definition einer ersten und zweiten Eigenschaft zwischen großen Hindernissen (z. B. große Tiere) und kleinen Hindernissen (kleine Tiere) unterschieden werden.

Alternativ oder zusätzlich kann vorgesehen sein, dass im Rahmen des Verfahrens Eisenbahnsignale einer Eisenbahngleisanlage überwacht werden und die vorgegebene Eigenschaft eine Fahrtfreigabe des Eisenbahnsignals der Eisenbahngleisanlage betrifft und das Eisenbahnsignal als die vorgegebene Eigenschaft aufweisend angesehen wird, wenn das Eisenbahnsignal die Fahrtfreigabe anzeigt.

Mit Blick auf die Anwendung des Verfahrens bei Eisenbahnsignalen einer Eisenbahngleisanlage ist es besonders vorteilhaft, wenn eine Überprüfung auf das Vorliegen einer ersten und zweiten Eigenschaft vorgenommen wird, wobei die erste Eigenschaft eine Fahrtfreigabe des Eisenbahnsignals betrifft und das Eisenbahnsignal als die erste Eigenschaft aufweisend angesehen wird, wenn das Eisenbahnsignal die Fahrtfreigabe anzeigt, und die zweite Eigenschaft einen Langsamfahrtbefehl oder einen Haltebefehl des Eisenbahnsignals betrifft und das Eisenbahnsignal als die zweite Eigenschaft aufweisend angesehen wird, wenn das Eisenbahnsignal den Langsamfahrtbefehl oder den Haltebefehl anzeigt.

Zur Erkennung von Hindernissen ist es vorteilhaft, wenn der Sensor und/oder der mindestes eine weitere Sensor eine Bilderfassungseinrichtung ist oder aufweist, die als das Sensorsignal ein Bildsignal erzeugt.

Auch ist es vorteilhaft, wenn der eine Sensor und der mindestes eine weitere Sensor auf unterschiedlichen Messprinzipien beruhen und Sensorsignale unterschiedlicher Art erzeugen.

Zur Erkennung von Hindernissen ist es besonders vorteilhaft, wenn der Sensor eine Bilderfassungseinrichtung ist oder aufweist, die als ihr Sensorsignal ein Bildsignal erzeugt, das ein Objekt in einem Streckenabschnitt einer Eisenbahngleisanlage anzeigen kann, und/oder der mindestens eine weitere Sensor ein Schwingungssensor, ein Infrarotsensor oder ein Radarsensor ist oder einen solchen aufweist, der als sein Sensorsignal ein Ausgangssignal erzeugt, das ein Objekt in dem Streckenabschnitt der Eisenbahngleisanlage anzeigen kann.

Mit der Auswerteinrichtung wird vorzugsweise als Statussignal ein Warnsignal erzeugt, falls das erste Hilfssignal das Vorliegen der Eigenschaft bestätigt und das zweite Hilfssignal das Nichtvorliegen der Eigenschaft bestätigt, oder das erste Hilfssignal das Vorliegen der Eigenschaft nicht bestätigt und das zweite Hilfssignal das Nichtvorliegen der Eigenschaft ebenfalls nicht bestätigt.

Die Erfindung bezieht sich darüber hinaus auf eine Einrichtung zum Erzeugen eines Statussignals auf der Basis zumindest eines Sensorsignals zumindest eines Sensors, mit den Merkmalen des Patentanspruchs 11. Erfindungsgemäß ist vorgesehen, dass die Einrichtung ein erstes trainierbares System aufweist, das auf ein Erkennen einer vorgegebenen Eigenschaft trainiert worden ist, dazu ausgebildet ist zu prüfen, ob das Sensorsignal des zumindest einen Sensors die vorgegebene Eigenschaft anzeigt, und im Falle, dass die Eigenschaft erkannt wird, ein die Eigenschaft bestätigendes erstes Hilfssignal erzeugt, die Einrichtung zumindest ein zweites trainierbares System aufweist, das auf ein Erkennen des Nichtvorliegens der vorgegebenen Eigenschaft trainiert worden ist, dazu ausgebildet ist zu prüfen, ob das Sensorsignal des zumindest einen Sensors oder das Sensorsignal mindestens eines weiteren Sensors, das geeignet ist, dieselbe Eigenschaft anzuzeigen, die vorgegebene Eigenschaft nicht anzeigt, und im Falle, dass das Nichtvorliegen der Eigenschaft festgestellt wird, ein das Nichtvorliegen der Eigenschaft bestätigendes zweites Hilfssignal erzeugt, und die Einrichtung eine Auswerteinrichtung aufweist, die dazu ausgebildet ist, ein das Vorliegen der Eigenschaft anzeigendes Statussignal zu erzeugen, falls das erste Hilfssignal das Vorliegen der Eigenschaft bestätigt und das zweite Hilfssignal das Nichtvorliegen der Eigenschaft nicht bestätigt, und ein das Nichtvorliegen der Eigenschaft anzeigendes Statussignal zu erzeugen, falls das erste Hilfssignal das Vorliegen der Eigenschaft nicht bestätigt und das zweite Hilfssignal das Nichtvorliegen der Eigenschaft bestätigt.

Bezüglich der Vorteile der erfindungsgemäßen Einrichtung sei auf die obigen Ausführungen im Zusammenhang mit dem erfindungsgemäßen Verfahren verwiesen.

Vorteilhaft ist es, wenn die Einrichtung eine Streckenüberwachungseinrichtung bildet, und/oder das erste und zweite trainierbare System neuronale Netze sind.

Bezüglich der Ausgestaltung der Einrichtung wird es außerdem als vorteilhaft angesehen, wenn die Einrichtung eine Recheneinrichtung und einen Speicher aufweist und in dem Speicher ein erstes, zweites und drittes Softwaremodul abgespeichert sind, die bei Ausführung durch die Recheneinrichtung das erste und zweite trainierbare System und die Auswerteinrichtung bilden.

Die Erfindung bezieht sich darüber hinaus auf ein Fahrzeug, insbesondere Schienenfahrzeug, mit den Merkmalen des Patentanspruchs 14. Erfindungsgemäß ist vorgesehen, dass das Fahrzeug eine Einrichtung aufweist, wie sie oben beschrieben worden ist, die Einrichtung einen vor oder hinter dem Fahrzeug befindlichen Streckenabschnitt auf das Vorhandensein eines Objekts in dem Streckenabschnitt überwacht und die vorgegebene Eigenschaft das Vorhandensein des Objekts in dem Streckenabschnitt betrifft und der Streckenabschnitt als die vorgegebene Eigenschaft aufweisend angesehen wird, wenn ein Objekt in dem Streckenabschnitt erkannt wird. Bezüglich der Vorteile des erfindungsgemäßen Fahrzeugs sei auf die obigen Ausführungen im Zusammenhang mit dem erfindungsgemäßen Verfahren verwiesen.

Die Erfindung bezieht sich darüber hinaus auf ein Computerprogrammprodukt mit den Merkmalen des Patentanspruchs 15. Erfindungsgemäß ist vorgesehen, dass das Computerprogrammprodukt Softwaremodule aufweist, die bei Ausführung durch eine Recheneinrichtung ein erstes und zweites trainierbares System und eine Auswerteinrichtung bilden, die geeignet sind, Sensorsignale wie oben beschrieben auszuwerten.

Die Erfindung wird nachfolgend anhand von Ausführungsbeispielen näher erläutert; dabei zeigen beispielhaft
- Figur 1: anhand eines Flussdiagramms ein erstes Ausführungsbeispiel für ein erfindungsgemäßes Verfahren,
- Figur 2: das erfindungsgemäße Verfahren gemäß Figur 1 für den Fall, dass eine vorgegebene Eigenschaft erkannt wird,
- Figur 3: das erfindungsgemäße Verfahren gemäß Figur 1 für den Fall, dass die vorgegebene Eigenschaft als sicher nicht vorliegend erkannt wird,
- Figur 4: das erfindungsgemäße Verfahren gemäß Figur 1 für den Fall, dass die trainierbaren Systeme einander widersprechende Ergebnisse erzielen,
- Figur 5: das erfindungsgemäße Verfahren gemäß Figur 1 für den Fall, dass keines der trainierbaren Systeme das Vorliegen oder Nichtvorliegen der Eigenschaft bestätigt,
- Figur 6: anhand eines weiteren Flussdiagramms ein zweites Ausführungsbeispiel für ein erfindungsgemäßes Verfahren,
- Figur 7: anhand eines weiteren Flussdiagramms ein drittes Ausführungsbeispiel für ein erfindungsgemäßes Verfahren,
- Figur 8: anhand eines weiteren Flussdiagramms ein viertes Ausführungsbeispiel für ein erfindungsgemäßes Verfahren,
- Figur 9: ein Ausführungsbeispiel für eine erfindungsgemäße Einrichtung zum Erzeugen eines Statussignals, und
- Figur 10: ein Ausführungsbeispiel für ein erfindungsgemäßes Schienenfahrzeug, das mit einer Streckenüberwachungseinrichtung ausgestattet ist.

In den Figuren werden der Übersicht halber für identische oder vergleichbare Komponenten stets dieselben Bezugszeichen verwendet.

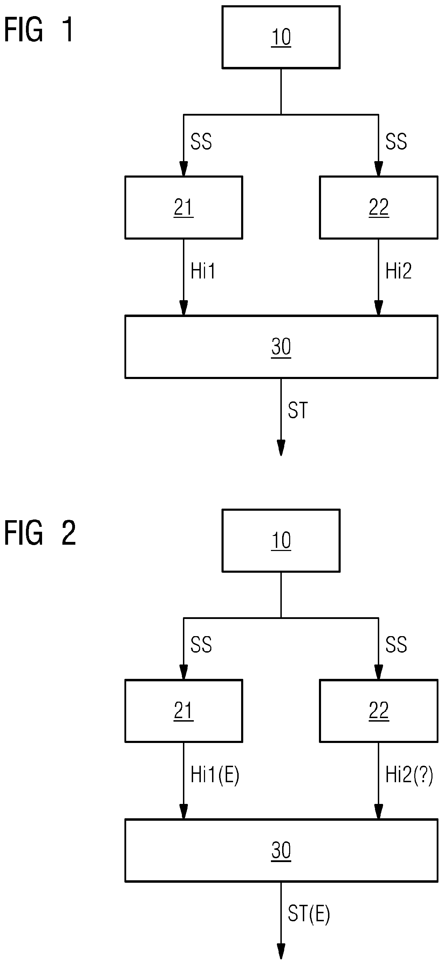

Die Figur 1 zeigt ein Flussdiagramm, das ein Ausführungsbeispiel für ein Verfahren zum Erzeugen eines Statussignals ST darstellt.

Mit einem Sensor 10, der das Vorliegen einer vorgegebenen Eigenschaft E erfassen kann, wird ein Sensorsignal SS erzeugt und an ein erstes trainierbares System 21 und ein zweites trainierbares System 22 weitergeleitet. Bei dem Sensor 10 kann es sich beispielsweise um eine Kamera für sichtbares Licht, eine Kamera für Infrarotlicht, einen Radarsensor, einen Schwingungssensor oder ein Mikrofon handeln.

Bei dem ersten trainierbaren System 21 handelt es sich um ein System künstlicher Intelligenz, das auf ein Erkennen einer vorgegebenen Eigenschaft E trainiert worden ist. Das erste trainierbare System 21 ist somit in der Lage zu prüfen, ob das Sensorsignal SS des Sensors 10 die vorgegebene Eigenschaft E anzeigt. Bei dem ersten trainierbaren System 21 handelt es sich vorzugsweise um neuronales Netz, das anhand von die Eigenschaft E anzeigenden Sensorsignalen auf das Vorliegen der Eigenschaft E trainiert worden ist.

Bei dem zweiten trainierbaren System 22 handelt es sich um ein System künstlicher Intelligenz, das auf das Erkennen des Nichtvorliegens der vorgegebenen Eigenschaft E trainiert worden ist und somit prüfen kann, ob sich aus dem Sensorsignal SS des Sensors 10 ableiten lässt, dass die Eigenschaft E nicht vorliegt. Das zweite trainierbare System 22 ist vorzugsweise anhand von Sensorsignalen SS trainiert worden, bei denen das Sensorsignal SS die vorgegebene Eigenschaft E eben nicht aufweist. Bei dem zweiten trainierbaren System 22 handelt es sich vorzugsweise ebenfalls um ein neuronales Netz.

Die beiden trainierbaren Systeme 21 und 22 erzeugen ausgangsseitig ein erstes Hilfssignal Hi1 bzw. Hi2, die das Ergebnis ihrer Überprüfung des Sensorsignals SS anzeigen, und übermitteln diese an eine nachgeordnete Auswerteinrichtung 30.

Die Auswerteinrichtung 30 wertet die Hilfssignale Hi1 und Hi2 der beiden trainierbaren Systeme 21 und 22 aus und erzeugt ausgangsseitig das Statussignal ST, das das Ergebnis der Auswertung anzeigt.

Die Figur 2 zeigt das Flussdiagramm gemäß Figur 1 für den Fall näher im Detail, dass sich dem Sensorsignal SS die Eigenschaft E entnehmen lässt bzw. das Sensorsignal SS die vorgegebene Eigenschaft E anzeigt. In diesem Fall wird das erste trainierbare System 21 die vorgegebene Eigenschaft E erkennen und ausgangsseitig ein Hilfssignal Hi1(E) ausgeben, das das Vorliegen der vorgegebenen Eigenschaft E anzeigt.

Das zweite trainierbare System 22, das auf das Erkennen des Nichtvorliegens der vorgegebenen Eigenschaft E trainiert ist, kann ein Nichtvorliegen der Eigenschaft E nicht feststellen, da die Eigenschaft E vorliegt, und wird demgemäß ausgangsseitig ein zweites Hilfssignal Hi2(?) ausgeben, mit dem angezeigt wird, dass das Nichtvorliegen der Eigenschaft E seitens des zweiten trainierbaren Systems 22 nicht bestätigt werden kann.

Der Auswerteinrichtung 30 liegen somit die Hilfssignale Hi1(E) und Hi2(?) vor, woraus die Auswerteinrichtung 30 schließt, dass die Eigenschaft E in dem Sensorsignal SS enthalten ist bzw. das Sensorsignal SS die vorgegebene Eigenschaft E aufweist. Demgemäß wird die Auswerteinrichtung 30 ausgangsseitig ein Statussignal ST(E) erzeugen, mit dem das Vorliegen der Eigenschaft E bestätigt wird.

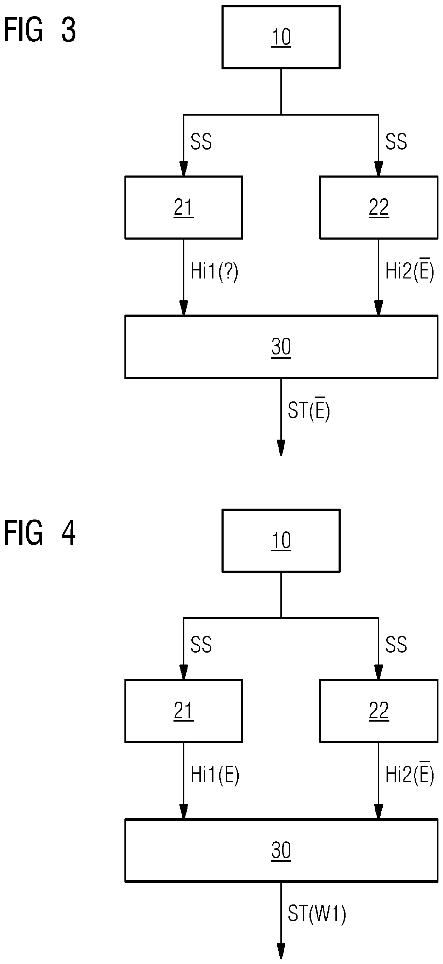

Die Figur 3 zeigt das Flussdiagramm gemäß Figur 1 beispielhaft für den Fall, dass das Sensorsignal SS die vorgegebene Eigenschaft E nicht aufweist bzw. nicht anzeigt.

In diesem Fall wird das erste trainierbare System 21 ausgangsseitig ein erstes Hilfssignal Hi1(?) erzeugen, mit dem angezeigt wird, dass das erste trainierbare System 21 das Vorliegen der Eigenschaft E nicht bestätigen kann.

Das zweite trainierbare System 22 wird hingegen das Nichtvorliegen der Eigenschaft E erkennen und ausgangsseitig ein zweites Hilfssignal Hi2(E̅) ausgeben, mit dem das Nichtvorliegen der Eigenschaft E bestätigt wird.

Die Auswerteinrichtung 30 wertet die vorliegenden beiden Hilfssignale Hi1(?) und Hi2(E̅) aus und erzeugt ausgangsseitig ein Statussignal ST(E̅), mit dem angezeigt wird, dass das Sensorsignal SS die vorgegebene Eigenschaft E nicht aufweist.

Die Figur 4 zeigt das Flussdiagramm gemäß Figur 1 für den Fall, dass sowohl das erste trainierbare System 21 als auch das zweite trainierbare System 22 positive Prüfungsergebnisse erzielen, also das erste trainierbare System 21 das Vorliegen der Eigenschaft E feststellt und das zweite trainierbare System 22 das Nichtvorliegen der Eigenschaft E bestätigt.

Die Auswerteinrichtung 30 erhält somit einander widersprechende Hilfssignale Hi1(E) und Hi2(E̅). Die Auswerteinrichtung wird in einem solchen Falle ein Statussignal ST(W1) ausgegeben, mit dem angezeigt wird, dass eine Aussage über das Vorliegen oder Nichtvorliegen der Eigenschaft E im Sensorsignal SS nicht getroffen werden kann, da die beiden trainierbaren Systeme 21 und 22 einander widersprechende Aussagen machen.

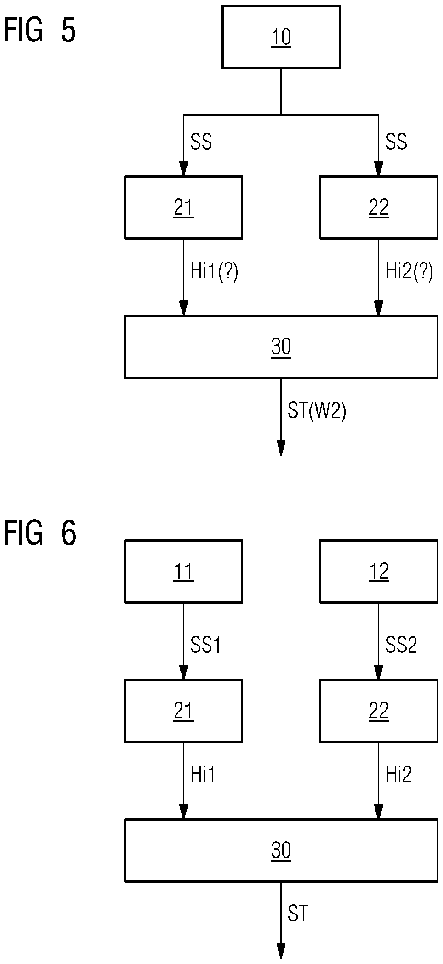

Die Figur 5 zeigt das Flussdiagramm gemäß Figur 1 für den Fall, dass das erste trainierbare System 21 im Sensorsignal SS die vorgegebene Eigenschaft E nicht erkennen kann. Auch das zweite trainierbare System 22 erzeugt kein positives Prüfungsergebnis, da es nicht feststellen kann, dass die vorgegebene Eigenschaft E nicht vorliegt.

Ausgangsseitig werden somit Hilfssignale Hi1(?) und Hi2(?) erzeugt, die zur Auswerteinrichtung 30 gelangen. Die Auswerteinrichtung 30 erhält also die Information, dass weder das Vorliegen der Eigenschaft E noch das Nichtvorliegen der Eigenschaft E festgestellt werden kann. Demgemäß erzeugt die Auswerteinrichtung 30 ausgangsseitig ein Statussignal ST(W2), mit dem angezeigt wird, dass keines der beiden trainierbaren Systeme 21 und 22 ein positives Prüfungsergebnis erzeugt hat.

Die Figur 6 zeigt anhand eines weiteren Flussdiagramms ein zweites Ausführungsbeispiel für ein Verfahren zum Erzeugen eines Statussignals ST. Im Unterschied zu dem Ausführungsbeispiel gemäß den Figuren 1 bis 5 werden zwei Sensorsignale SS1 und SS2 erzeugt, und zwar von einem ersten Sensor 11 und einem zweiten Sensor 12. Die beiden Sensoren 11 und 12 sind baugleich und somit beide in gleicher Weise in der Lage, die vorgegebene Eigenschaft E zu erkennen und in ihrem Sensorsignal SS1 bzw. SS2 anzuzeigen. Bei den Sensoren 11 und 12 kann es sich beispielsweise um eine Kamera für sichtbares Licht, eine Kamera für Infrarotlicht, einen Radarsensor, einen Schwingungssensor oder ein Mikrofon handeln.

Das Sensorsignal SS1 des ersten Sensors 11 gelangt zum ersten trainierbaren System 21, und das zweite Sensorsignal SS2 des zweiten Sensors 12 zum zweiten trainierbaren System 22. Die beiden trainierbaren Systeme 21 und 22 sowie die Auswerteinrichtung 30 arbeiten vorzugsweise genauso, wie dies im Zusammenhang mit den Figuren 1 bis 5 erläutert worden ist; diesbezüglich sei auf die obigen Ausführungen verwiesen.

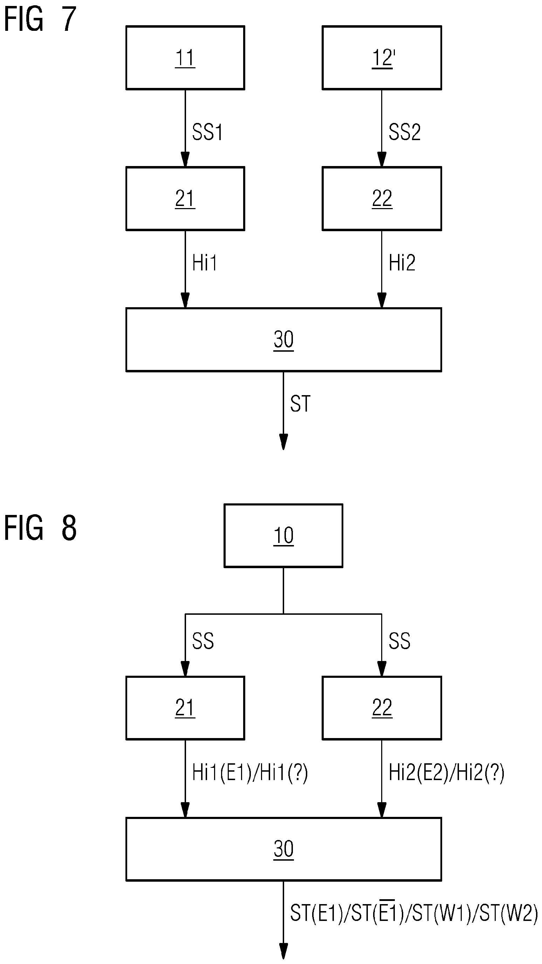

Die Figur 7 zeigt Flussdiagramm für ein drittes Ausführungsbeispiel für ein Verfahren zum Erzeugen eines Statussignals ST, das im Wesentlichen dem Ausführungsbeispiel gemäß Figur 6 entspricht. Bei dem Ausführungsbeispiel gemäß Figur 7 sind die beiden Sensoren 11 und 12' unterschiedlich und basieren auf unterschiedlichen Messprinzipien. Die beiden Sensoren 11 und 12' sind jedoch dahingehend ähnlich bzw. übereinstimmend, dass sie beide die Eigenschaft E erkennen und in ihrem Sensorsignal SS1 bzw. SS2 anzeigen können. Bei den Sensoren 11 und 12' kann es sich beispielsweise um Kameras für sichtbares Licht, Kameras für Infrarotlicht, Radarsensoren, Schwingungssensoren oder Mikrofone handeln.

Im Übrigen gelten die obigen Ausführungen im Zusammenhang mit den Figuren 1 bis 6 bei dem Ausführungsbeispiel gemäß Figur 7 entsprechend.

Die Figur 8 zeigt anhand eines weiteren Flussdiagramms ein viertes Ausführungsbeispiel für ein Verfahren zum Erzeugen eines Statussignals ST.

Bei dem Ausführungsbeispiel gemäß Figur 8 ist das erste trainierbare System 21 auf das Erkennen einer vorgegebenen ersten Eigenschaft E1 trainiert. Erkennt das erste trainierbare System 21 in dem eingangsseitig anliegenden Sensorsignal SS das Vorliegen der ersten Eigenschaft E1, so erzeugt es ausgangsseitig ein erstes Hilfssignal Hi1(E1), mit dem das Vorliegen der ersten Eigenschaft bestätigt wird. Kann das erste trainierbare System 21 das Vorliegen der ersten Eigenschaft E1 nicht bestätigen, so erzeugt es ausgangsseitig ein erstes Hilfssignal Hi1(?), mit dem das Vorliegen der ersten Eigenschaft E1 gerade nicht bestätigt wird.

Das zweite trainierbare System 22 ist auf das Erkennen einer zweiten Eigenschaft E2 trainiert und erzeugt ausgangsseitig ein zweites Hilfssignal Hi2(E2), wenn es das Vorliegen der zweiten Eigenschaft E2 im Sensorsignal SS erkennen kann. Andernfalls, wenn also die zweite Eigenschaft E2 nicht erkannt werden kann, erzeugt das zweite trainierbare System 22 ein zweites Hilfssignal Hi2(?).

Die erste Eigenschaft E1 und die zweite Eigenschaft E2 schließen sich bei dem Ausführungsbeispiel gemäß Figur 8 inhaltlich aus, so dass bei Vorliegen der ersten Eigenschaft E1 die zweite Eigenschaft E2 nicht vorhanden sein kann und dementsprechend beim Vorliegen der zweiten Eigenschaft E2 die erste Eigenschaft E1 nicht vorhanden sein kann.

Die Auswerteinrichtung 30 wertet die eingangsseitig anliegenden Hilfssignale Hi1 und Hi2 aus und erzeugt ausgangsseitig ein das Vorliegen der ersten Eigenschaft bestätigendes Statussignal ST(E1), wenn das erste trainierbare System 21 das Vorliegen der ersten Eigenschaft E1 anzeigt und das zweite Hilfssignal Hi2 das Vorliegen der zweiten Eigenschaft E2 nicht bestätigt.

Die Auswerteinrichtung 30 erzeugt ausgangsseitig ein das Nichtvorliegen der ersten Eigenschaft bestätigendes Statussignal ST(E̅1), wenn das erste trainierbare System 21 das Vorliegen der ersten Eigenschaft E1 nicht bestätigt, aber das zweite trainierbare System 22 das Vorliegen der zweiten Eigenschaft E2 anzeigt.

Erhält die Auswerteinrichtung 30 ein erstes Hilfssignal Hi1(E1) und ein zweites Hilfssignal Hi2(E2), mit denen also angezeigt wird, dass beide Eigenschaften E1 und E2 im Sensorsignal SS vorliegen sollen, so erzeugt die Auswerteinrichtung 30 ausgangsseitig ein Statussignal ST(W1), mit dem sie das Vorliegen nicht plausibler Hilfssignale anzeigt. Wie erwähnt, schließen sich die erste Eigenschaft E1 und die zweite Eigenschaft E2 aus und können somit nicht gleichzeitig vorhanden sein.

Für den Fall, dass die beiden trainierbaren Systeme 21 und 22 weder das Vorliegen der ersten Eigenschaft E1 noch das Vorliegen der zweiten Eigenschaft E2 feststellen können und demgemäß Hilfssignale Hi1(?) und Hi2(?) erzeugen, so generiert die Auswerteinrichtung 30 ausgangsseitig ein Statussignal ST(W2), mit dem angezeigt wird, dass im Sensorsignal SS keine der beiden Eigenschaften E1 und E2 festgestellt werden kann.

Bei dem Ausführungsbeispiel gemäß Figur 8 werden die trainierbaren Systeme 21 und 22 von einem einzigen Sensor 10 mit einem Sensorsignal SS gespeist, wie dies auch im Zusammenhang mit dem Ausführungsbeispiel gemäß den Figuren 1 bis 5 der Fall ist. Alternativ ist es möglich, das erste trainierbare System 21 mit dem Sensorsignal SS eines ersten Sensors 11 und das zweite trainierbare System 22 mit dem Sensorsignal SS2 eines zweiten Sensors 12 zu speisen, wie dies im Zusammenhang mit den Ausführungsbeispielen gemäß den Figuren 6 und 7 erläutert wurde. Die beiden Sensoren 11 und 12 können dabei baugleich sein, wie dies im Zusammenhang mit der Figur 6 erläutert wurde, oder auf unterschiedlichen Messprinzipien beruhen, wie dies im Zusammenhang mit der Figur 7 erläutert wurde. Die obigen Erläuterungen im Zusammenhang mit den Figuren 6 und 7 gelten somit für das Ausführungsbeispiel gemäß Figur 8 entsprechend.

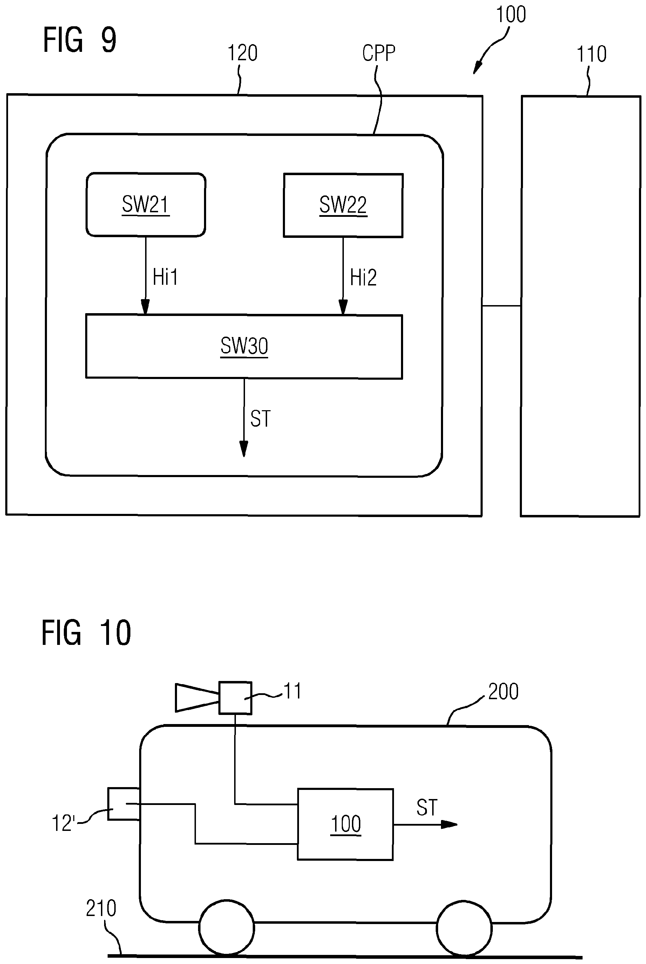

Die Figur 9 zeigt ein Ausführungsbeispiel für eine Einrichtung 100 zum Erzeugen eines Statussignals ST auf der Basis eines Sensorsignals SS (vgl. Figuren 1 bis 5 und 8) oder mehrerer Sensorsignale SS1 und SS2 (vgl. Figuren 6 und 7).

Die Einrichtung 100 weist eine Recheneinrichtung 110 und einen Speicher 120 auf. In dem Speicher 120 ist ein Computerprogrammprodukt CPP abgespeichert, das bei Ausführung durch die Recheneinrichtung 110 diese befähigt, ein Verfahren zum Erzeugen eines Statussignals ST auszuführen, wie dies oben im Zusammenhang mit den Figuren 1 bis 8 erläutert worden ist.

Zu diesem Zweck weist das Computerprogrammprodukt CPP ein erstes Softwaremodul SW21 auf, das bei Ausführung durch die Recheneinrichtung 110 ein erstes trainierbares System, vorzugsweise in Form eines neuronalen Netzes, bildet, das zum Erkennen einer vorgegebenen Eigenschaft E bzw. einer ersten Eigenschaft E1 geeignet ist, wie dies im Zusammenhang mit den Figuren 1 bis 8 oben erläutert worden ist.

Darüber hinaus weist das Computerprogrammprodukt CPP ein zweites Softwaremodul SW22 auf, das bei Ausführung durch die Recheneinrichtung 110 diese dazu befähigt, ein zweites trainierbares System 22 zu bilden, wie dies im Zusammenhang mit den Figuren 1 bis 8 oben erläutert worden ist.

Ein drittes Softwaremodul SW30 bildet bei Ausführung durch die Recheneinrichtung 110 eine Auswerteinrichtung 30, wie sie oben im Zusammenhang mit dem Verfahren gemäß den Figuren 1 bis 8 erläutert worden ist.

Die Figur 10 zeigt ein Ausführungsbeispiel für ein Schienenfahrzeug 200, das auf einer Eisenbahngleisanlage 210 fährt und mit einer Einrichtung 100 gemäß Figur 9 sowie Sensoren 11 und 12' ausgestaltet ist. Das Computerprogrammprodukt CPP bzw. die Softwaremodule SW21 und SW22 sind vorzugsweise derart ausgestaltet, dass die Einrichtung 100 eine Streckenüberwachungseinrichtung bildet, die einen Streckenabschnitt einer Eisenbahnanlage auf das Vorhandensein eines Objekts in dem Streckenabschnitt überwachen kann.

Im Falle einer Ausgestaltung der Softwaremodule SW21 und SW22 im Sinne der Erläuterungen gemäß den Figuren 1 bis 5 werden die durch die Softwaremodule SW21 und SW22 gebildeten trainierbaren Systeme 21 und 22 vorzugsweise derart trainiert sein, dass sie als vorgegebene Eigenschaft E das Vorhandensein eines Objekts im Streckenabschnitt erkennen können oder alternativ ein Nichtvorhandensein eines Objekts bestätigen können.

Werden die Softwaremodule SW21 und SW22 auf das Erkennen einer ersten Eigenschaft E1 und das Erkennen einer zweiten Eigenschaft E2 trainiert, wie dies im Zusammenhang mit der Figur 8 erläutert wurde, so kann das Trainieren beispielsweise auf das Erkennen großer Objekte (z. B. großer Tiere) und das Erkennen kleiner Objekte (z. B. kleiner Tiere) gerichtet werden. Alternativ können die Softwaremodule SW21 und SW22 auch auf das Erkennen der Anzeige von Eisenbahnsignalen trainiert werden.

Selbstverständlich sind auch andere Eigenschaften trainierbar, die im Zusammenhang mit dem Betrieb von Eisenbahngleisanlagen und dem Betrieb von Schienenfahrzeugen vorteilhaft sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Sensor
- 11: Sensor
- 12: Sensor
- 12': Sensor
- 21: System
- 22: System
- 30: Auswerteinrichtung
- 100: Einrichtung
- 110: Recheneinrichtung
- 120: Speicher
- 200: Schienenfahrzeug
- 210: Eisenbahngleisanlage
- CPP: Computerprogrammprodukt
- E: Eigenschaft
- E1: Eigenschaft
- E2: Eigenschaft
- Hi1: Hilfssignal
- Hi2: Hilfssignal
- Hi1(?): Hilfssignal
- Hi2(?): Hilfssignal
- Hi1(E): Hilfssignal
- Hi2(E̅): Hilfssignal
- Hi1 (E1): Hilfssignal
- Hi2(E2): Hilfssignal
- SS: Sensorsignal
- SS1: Sensorsignal
- SS2: Sensorsignal
- ST: Statussignal
- ST(E): Statussignal
- ST (E1): Statussignal
- ST (E̅): Statussignal
- ST (E̅1): Statussignal
- ST(W1): Statussignal
- ST(W2): Statussignal
- SW21: Softwaremodul
- SW22: Softwaremodul
- SW30: Softwaremodul

## Patentansprüche

1. Verfahren zum Erzeugen eines Statussignals (ST) auf der Basis zumindest eines Sensorsignals (SS, SS1, SS2) zumindest eines Sensors (10, 11, 12, 12'), wobei
- mit einem ersten trainierbaren System (21), das auf ein Erkennen einer vorgegebenen Eigenschaft (E) trainiert worden ist, geprüft wird, ob das Sensorsignal (SS, SS1, SS2) des zumindest einen Sensors (10, 11, 12, 12') die vorgegebene Eigenschaft (E) anzeigt, und im Falle, dass die Eigenschaft (E) erkannt wird, ein die Eigenschaft (E) bestätigendes erstes Hilfssignal (Hi1) erzeugt wird,
- mit zumindest einem zweiten trainierbaren System (22), das auf ein Erkennen des Nichtvorliegens der vorgegebenen Eigenschaft (E) trainiert worden ist, geprüft wird, ob das Sensorsignal (SS, SS1, SS2) des zumindest einen Sensors (10, 11, 12, 12') oder das Sensorsignal (SS, SS1, SS2) mindestens eines weiteren Sensors (10, 11, 12, 12'), das geeignet ist, dieselbe Eigenschaft (E) anzuzeigen, die vorgegebene Eigenschaft (E) nicht anzeigt, und im Falle, dass das Nichtvorliegen der Eigenschaft (E) festgestellt wird, ein das Nichtvorliegen der Eigenschaft (E) bestätigendes zweites Hilfssignal (Hi2) erzeugt wird, und
- mit zumindest einer Auswerteinrichtung (30) ein das Vorliegen der Eigenschaft (E) anzeigendes Statussignal (ST) erzeugt wird, falls das erste Hilfssignal (Hi1) das Vorliegen der Eigenschaft (E) bestätigt und das zweite Hilfssignal (Hi2) das Nichtvorliegen der Eigenschaft (E) nicht bestätigt, und ein das Nichtvorliegen der Eigenschaft (E) anzeigendes Statussignal (ST) erzeugt wird, falls das erste Hilfssignal (Hi1) das Vorliegen der Eigenschaft (E) nicht bestätigt und das zweite Hilfssignal (Hi2) das Nichtvorliegen der Eigenschaft (E) bestätigt.

2. Verfahren nach Anspruch 1, wobei
- im Rahmen des Verfahrens die Befahrbarkeit eines Streckenabschnitts einer Eisenbahngleisanlage (210) geprüft wird und
- die vorgegebene Eigenschaft (E) die freie Befahrbarkeit des Streckenabschnitts der Eisenbahngleisanlage (210) betrifft.

3. Verfahren nach einem der voranstehenden Ansprüche, wobei
- im Rahmen des Verfahrens ein Streckenabschnitt einer Eisenbahngleisanlage (210) auf das Vorhandensein eines Objekts in dem Streckenabschnitt überwacht wird und
- die vorgegebene Eigenschaft (E) das Vorhandensein des Objekts in dem Streckenabschnitt der Eisenbahngleisanlage (210) betrifft und der Streckenabschnitt als die vorgegebene Eigenschaft (E) aufweisend angesehen wird, wenn ein Objekt in dem Streckenabschnitt erkannt wird.

4. Verfahren nach einem der voranstehenden Ansprüche, wobei
- im Rahmen des Verfahrens Eisenbahnsignale einer Eisenbahngleisanlage (210) überwacht werden und
- die vorgegebene Eigenschaft (E) eine Fahrtfreigabe des Eisenbahnsignals der Eisenbahngleisanlage (210) betrifft und das Eisenbahnsignal als die vorgegebene Eigenschaft (E) aufweisend angesehen wird, wenn das Eisenbahnsignal die Fahrtfreigabe anzeigt.

5. Verfahren nach einem der voranstehenden Ansprüche, wobei
- die erste Eigenschaft (E1) eine Fahrtfreigabe eines Eisenbahnsignals einer Eisenbahngleisanlage (210) betrifft und das Eisenbahnsignal als die erste Eigenschaft (E1) aufweisend angesehen wird, wenn das Eisenbahnsignal die Fahrtfreigabe anzeigt, und
- die zweite Eigenschaft (E2) einen Langsamfahrtbefehl oder einen Haltebefehl des Eisenbahnsignals betrifft und das Eisenbahnsignal als die zweite Eigenschaft (E2) aufweisend angesehen wird, wenn das Eisenbahnsignal den Langsamfahrtbefehl oder den Haltebefehl anzeigt.

6. Verfahren nach einem der voranstehenden Ansprüche, wobei der Sensor (10, 11, 12, 12') und/oder der mindestes eine weitere Sensor (10, 11, 12, 12') eine Bilderfassungseinrichtung ist oder aufweist, die als das Sensorsignal (SS, SS1, SS2) ein Bildsignal erzeugt.

7. Verfahren nach einem der voranstehenden Ansprüche, wobei der eine Sensor (10, 11, 12, 12') und der mindestes eine weitere Sensor (10, 11, 12, 12') auf unterschiedlichen Messprinzipien beruhen und Sensorsignale unterschiedlicher Art erzeugen.

8. Verfahren nach einem der voranstehenden Ansprüche, wobei
- der Sensor (10, 11, 12, 12') eine Bilderfassungseinrichtung ist oder aufweist, die als ihr Sensorsignal (SS, SS1, SS2) ein Bildsignal erzeugt, das ein Objekt in einem Streckenabschnitt einer Eisenbahngleisanlage (210) anzeigen kann, und/oder
- der mindestens eine weitere Sensor (10, 11, 12, 12') ein Schwingungssensor, ein Infrarotsensor oder ein Radarsensor ist oder einen solchen aufweist, der als sein Sensorsignal (SS, SS1, SS2) ein Ausgangssignal erzeugt, das ein Objekt in dem Streckenabschnitt der Eisenbahngleisanlage (210) anzeigen kann.

9. Verfahren nach einem der voranstehenden Ansprüche, wobei das erste und zweite trainierbare System (21, 22) neuronale Netze sind.

10. Verfahren nach einem der voranstehenden Ansprüche, wobei mit der Auswerteinrichtung (30) als Statussignal (ST) ein Warnsignal erzeugt wird, falls das erste Hilfssignal (Hi1) das Vorliegen der Eigenschaft (E) bestätigt und das zweite Hilfssignal (Hi2) das Nichtvorliegen der Eigenschaft (E) bestätigt, oder das erste Hilfssignal (Hi1) das Vorliegen der Eigenschaft (E) nicht bestätigt und das zweite Hilfssignal (Hi2) das Nichtvorliegen der Eigenschaft (E) ebenfalls nicht bestätigt.

11. Einrichtung (100) zum Erzeugen eines Statussignals (ST) auf der Basis zumindest eines Sensorsignals (SS, SS1, SS2) zumindest eines Sensors (10, 11, 12, 12'), wobei die Einrichtung (100) ein erstes trainierbares System (21) aufweist, das
- auf ein Erkennen einer vorgegebenen Eigenschaft (E) trainiert worden ist,
- dazu ausgebildet ist zu prüfen, ob das Sensorsignal (SS, SS1, SS2) des zumindest einen Sensors (10, 11, 12, 12') die vorgegebene Eigenschaft (E) anzeigt, und
- im Falle, dass die Eigenschaft (E) erkannt wird, ein die Eigenschaft (E) bestätigendes erstes Hilfssignal (Hi1) erzeugt,
- die Einrichtung (100) zumindest ein zweites trainierbares System (22) aufweist, das
- auf ein Erkennen des Nichtvorliegens der vorgegebenen Eigenschaft (E) trainiert worden ist,
- dazu ausgebildet ist zu prüfen, ob das Sensorsignal (SS, SS1, SS2) des zumindest einen Sensors (10, 11, 12, 12') oder das Sensorsignal (SS, SS1, SS2) mindestens eines weiteren Sensors (10, 11, 12, 12'), das geeignet ist, dieselbe Eigenschaft (E) anzuzeigen, die vorgegebene Eigenschaft (E) nicht anzeigt, und
- im Falle, dass das Nichtvorliegen der Eigenschaft (E) festgestellt wird, ein das Nichtvorliegen der Eigenschaft (E) bestätigendes zweites Hilfssignal (Hi2) erzeugt, und
- die Einrichtung (100) eine Auswerteinrichtung (30) aufweist, die dazu ausgebildet ist, ein das Vorliegen der Eigenschaft (E) anzeigendes Statussignal (ST) zu erzeugen, falls das erste Hilfssignal (Hi1) das Vorliegen der Eigenschaft (E) bestätigt und das zweite Hilfssignal (Hi2) das Nichtvorliegen der Eigenschaft (E) nicht bestätigt, und ein das Nichtvorliegen der Eigenschaft (E) anzeigendes Statussignal (ST) zu erzeugen, falls das erste Hilfssignal (Hi1) das Vorliegen der Eigenschaft (E) nicht bestätigt und das zweite Hilfssignal (Hi2) das Nichtvorliegen der Eigenschaft (E) bestätigt.

12. Einrichtung (100) nach Anspruch 11, wobei die Einrichtung (100) eine Streckenüberwachungseinrichtung bildet, und/oder das erste und zweite trainierbare System (21, 22) neuronale Netze sind.

13. Einrichtung (100) nach einem der voranstehenden Ansprüche 11 bis 12, wobei
- die Einrichtung (100) eine Recheneinrichtung (110) und einen Speicher (120) aufweist und
- in dem Speicher (120) ein erstes, zweites und drittes Softwaremodul (SW21, SW22, SW30) abgespeichert sind, die bei Ausführung durch die Recheneinrichtung (110) das erste und zweite trainierbare System (21, 22) und die Auswerteinrichtung (30) bilden.

14. Fahrzeug, insbesondere Schienenfahrzeug (200), wobei
- das Fahrzeug eine Einrichtung (100) nach einem der voranstehenden Ansprüche 11 bis 13 aufweist,
- die Einrichtung (100) einen vor oder hinter dem Fahrzeug befindlichen Streckenabschnitt auf das Vorhandensein eines Objekts in dem Streckenabschnitt überwacht und
- die vorgegebene Eigenschaft (E) das Vorhandensein des Objekts in dem Streckenabschnitt betrifft und der Streckenabschnitt als die vorgegebene Eigenschaft (E) aufweisend angesehen wird, wenn ein Objekt in dem Streckenabschnitt erkannt wird.

15. Computerprogrammprodukt (CPP), insbesondere für eine Einrichtung (100) nach Anspruch 13, wobei das Computerprogrammprodukt (CPP) Softwaremodule (SW21, SW22, SW30) aufweist, die bei Ausführung durch eine Recheneinrichtung (110) ein erstes und zweites trainierbares System (21, 22) und eine Auswerteinrichtung (30) bilden, die geeignet sind Sensorsignale (SS, SS1, SS2) gemäß einem der voranstehenden Ansprüche 1 bis 10 auszuwerten.

## Claims

1. Method for generating a status signal (ST) on the basis of at least one sensor signal (SS, SS1, SS2) of at least one sensor (10, 11, 12, 12'), wherein
- with a first trainable system (21), which has been trained to recognise a predefined property (E), it is checked whether the sensor signal (SS, SS1, SS2) of the at least one sensor (10, 11, 12, 12') indicates the predefined property (E), and in the event that the property (E) is recognised, a first auxiliary signal (Hi1) that confirms the property (E) is generated,
- with at least one second trainable system (22), which has been trained to recognise the absence of the predefined property (E), it is checked whether the sensor signal (SS, SS1, SS2) of the at least one sensor (10, 11, 12, 12') or the sensor signal (SS, SS1, SS2) of at least one further sensor (10, 11, 12, 12'), which is suitable to indicate the same property (E), does not indicate the predefined property (E), and in the event that the absence of the property (E) is ascertained, a second auxiliary signal (Hi2) that confirms the absence of the property (E) is generated, and
- with at least one evaluation facility (30) a status signal (ST) that indicates the presence of the property (E) is generated if the first auxiliary signal (Hi1) confirms the presence of the property (E) and the second auxiliary signal (Hi2) does not confirm the absence of the property (E), and a status signal (ST) that indicates the absence of the property (E) is generated if the first auxiliary signal (Hi1) does not confirm the presence of the property (E) and the second auxiliary signal (Hi2) confirms the absence of the property (E).

2. Method according to claim 1,
wherein
- as part of the method, the route availability of a track section of a railway track installation (210) is checked and
- the predefined property (E) relates to the free route availability of the track section of the railway track installation (210).

3. Method according to one of the preceding claims,
wherein
- as part of the method, a track section of a railway track installation (210) is monitored for the presence of an object in the track section and
- the predefined property (E) relates to the presence of the object in the track section of the railway track installation (210) and the track section is considered to have the predefined property (E) if an object is recognised in the track section.

4. Method according to one of the preceding claims,
wherein
- as part of the method, railway signals of a railway track installation (210) are monitored and
- the predefined property (E) relates to a permission to proceed of the railway signal of the railway track installation (210) and the railway signal is considered to have the predefined property (E) if that railway signal indicates the permission to proceed.

5. Method according to one of the preceding claims,
wherein
- the first property (E1) relates to a permission to proceed of a railway signal of a railway track installation (210) and the railway signal is considered to have the first property (E1) if the railway signal indicates the permission to proceed, and
- the second property (E2) relates to a command to proceed slowly or a command to stop of the railway signal and the railway signal is considered to have the second property (E2) if the railway signal indicates the command to proceed slowly or the command to stop.

6. Method according to one of the preceding claims,
wherein
the sensor (10, 11, 12, 12') and/or the at least one further sensor (10, 11, 12, 12') is or has an image acquisition facility, which generates an image signal as the sensor signal (SS, SS1, SS2).

7. Method according to one of the preceding claims,
wherein
the one sensor (10, 11, 12, 12') and the at least one further sensor (10, 11, 12, 12') are based on different measurement principles and generate different kinds of sensor signals.

8. Method according to one of the preceding claims,
wherein
- the sensor (10, 11, 12, 12') is or has an image acquisition facility, which generates an image signal that is able to indicate an object in a track section of a railway track installation (210) as its sensor signal (SS, SS1, SS2), and/or
- the at least one further sensor (10, 11, 12, 12') is an oscillation sensor, an infrared sensor or a radar sensor or has such a sensor, which generates an output signal that is able to indicate an object in the track section of the railway track installation (210) as its sensor signal (SS, SS1, SS2).

9. Method according to one of the preceding claims,
wherein
the first and second trainable system (21, 22) are neural networks.

10. Method according to one of the preceding claims,
wherein
with the evaluation facility (30) a warning signal is generated as status signal (ST) if the first auxiliary signal (Hi1) confirms the presence of the property (E) and the second auxiliary signal (Hi2) confirms the absence of the property (E), or the first auxiliary signal (Hi1) does not confirm the presence of the property (E) and the second auxiliary signal (Hi2) likewise does not confirm the absence of the property (E) .

11. Facility (100) for generating a status signal (ST) on the basis of at least one sensor signal (SS, SS1, SS2) of at least one sensor (10, 11, 12, 12'),
wherein
the facility (100) has a first trainable system (21), which
- has been trained to recognise a predefined property (E),
- is embodied to check whether the sensor signal (SS, SS1, SS2) of the at least one sensor (10, 11, 12, 12') indicates the predefined property (E), and
- in the event that the property (E) is recognised, generates a first auxiliary signal (Hi1) that confirms the property (E),
- the facility (100) has at least one second trainable system (22), which
- has been trained to recognise the absence of the predefined property (E),
- is embodied to check whether the sensor signal (SS, SS1, SS2) of the at least one sensor (10, 11, 12, 12') or the sensor signal (SS, SS1, SS2) of at least one further sensor (10, 11, 12, 12'), which is suitable to indicate the same property (E), does not indicate the predefined property (E), and
- in the event that the absence of the property (E) is ascertained, a second auxiliary signal (Hi2) that confirms the absence of the property (E) is generated, and
- the facility (100) has an evaluation facility (30), which is embodied to generate a status signal (ST) that indicates the presence of the property (E) if the first auxiliary signal (Hi1) confirms the presence of the property (E) and the second auxiliary signal (Hi2) does not confirm the absence of the property (E), and to generate a status signal (ST) that indicates the absence of the property (E) if the first auxiliary signal (Hi1) does not confirm the presence of the property (E) and the second auxiliary signal (Hi2) confirms the absence of the property (E).

12. Facility (100) according to claim 11,
wherein
the facility (100) forms a track monitoring facility, and/or the first and second trainable system (21, 22) are neural networks.

13. Facility (100) according to one of the preceding claims 11 to 12,
wherein
- the facility (100) has a computing facility (110) and a memory (120) and
- stored in the memory (120) are a first, second and third software module (SW21, SW22, SW30), which form the first and second trainable system (21, 22) and the evaluation facility (30) when executed by the computing facility (110) .

14. Vehicle, in particular rail vehicle (200),
wherein
- the vehicle has a facility (100) according to one of the preceding claims 11 to 13,
- the facility (100) monitors a track section located in front of or behind the vehicle for the presence of an object in the track section and
- the predefined property (E) relates to the presence of the object in the track section and the track section is considered to have the predefined property (E) if an object is recognised in the track section.

15. Computer program product (CPP), in particular for a facility (100) according to claim 13,
wherein
the computer program product (CPP) has software modules (SW21, SW22, SW30), which form a first and second trainable system (21, 22) and an evaluation facility (30) when executed by the computing facility (110), which are suitable to evaluate sensor signals (SS, SS1, SS2) in accordance with one of the preceding claims 1 to 10.

## Revendications

1. Procédé de production d'un signal (ST) d'état sur la base d'au moins un signal (SS, SS1, SS2) de capteur d'au moins un capteur (10, 11, 12, 12'), dans lequel
- on contrôle par un premier système (21), qui peut subir un apprentissage et qui a subi un apprentissage de reconnaissance d'une propriété (E) donnée à l'avance, si le signal (SS, SS1, SS2) de capteur du au moins un capteur (10, 11, 12, 12') indique la propriété (E) donnée à l'avance et, dans le cas où la propriété (E) est reconnue, on produit un premier signal (Hi1) auxiliaire confirmant la propriété (E),
- par au moins un deuxième système (22), qui peut subir un apprentissage et qui a subi un apprentissage de reconnaissance de la non présence de la propriété (E) donnée à l'avance, on contrôle si le signal (SS, SS1, SS2) de capteur du au moins un capteur (10, 11, 12, 12') ou le signal (SS, SS1, SS2) de capteur d'au moins un autre capteur (10, 11, 12, 12'), qui est propre à indiquer la même propriété (E), n'indique pas la propriété (E) donnée à l'avance, et dans le cas où la non présence de la propriété (E) est constatée, on produit un deuxième signal (Hi2) auxiliaire confirmant la non présence de la propriété (E), et
- par au moins un dispositif (30) d'analyse, on produit un signal (ST) d'état, indiquant la présence de la propriété (E), si le premier signal (Hi1) auxiliaire confirme la présence de la propriété (E) et le deuxième signal (Hi2) auxiliaire ne confirme pas la non présence de la propriété (E), et on produit un signal (ST) d'état, indiquant la non présence de la propriété (E), si le premier signal (Hi1) auxiliaire ne confirme pas la présence de la propriété (E) et le deuxième signal (Hi2) auxiliaire confirme la non présence de la propriété (E).

2. Procédé suivant la revendication 1,
dans lequel
- dans le cadre du procédé, on contrôle la possibilité d'emprunter librement un tronçon de voie d'une installation (210) de chemin de fer et
- la propriété (E) donnée à l'avance concerne la possibilité d'emprunter librement le tronçon de voie du réseau (210) de chemin de fer.

3. Procédé suivant l'une des revendications précédentes,
dans lequel
- dans le cadre du procédé, on contrôle un tronçon de voie du réseau (210) de chemin de fer sur le point de savoir, si un objet est présent dans le tronçon de voie et
- la propriété (E) donnée à l'avance concerne la présence de l'objet dans le tronçon de voie du réseau (210) de chemin de fer, et on considère le tronçon de voie comme ayant la propriété (E) donnée à l'avance, si on détecte un objet dans le tronçon de voie.

4. Procédé suivant l'une des revendications précédentes,
dans lequel,
- dans le cadre du procédé, on contrôle les signaux d'une installation (210) de voie ferrée et
- la propriété (E) donnée à l'avance concerne une autorisation de circulation du signal du réseau (210) de voie ferrée, et on considère que le signal de voie ferrée a la propriété (E) donnée à l'avance, si le signal de voie ferrée indique l'autorisation de circulation.

5. Procédé suivant l'une des revendications précédentes,
dans lequel
- la première propriété (E1) concerne une autorisation de circulation d'un signal du réseau (210) de voie ferrée et on considère le signal de voie ferrée comme ayant la première propriété (E1), si le signal de voie ferrée indique l'autorisation de circulation, et
- la deuxième propriété (E2) concerne un ordre de circuler lentement ou un ordre d'arrêt du signal de voie ferrée et on considère le signal de voie ferrée comme ayant la deuxième propriété (E2), si le signal de voie ferrée indique l'ordre de circuler lentement ou l'ordre d'arrêt.

6. Procédé suivant l'une des revendications précédentes,
dans lequel
le capteur (10, 11, 12, 12') et/ou le au moins un autre capteur (10, 11, 12, 12') est ou a un dispositif de détection de l'image, qui produit un signal d'image comme signal (SS, SS1, SS2) de capteur.

7. Procédé suivant l'une des revendications précédentes,
dans lequel
le un capteur (10, 11, 12, 12') et le au moins un autre capteur (10, 11, 12, 12') reposent sur des principes de mesure différents et produisent des signaux de capteur de type différent.

8. Procédé suivant l'une des revendications précédentes,
dans lequel
- le capteur (10, 11, 12, 12') est ou a un dispositif de détection d'image, qui produit, comme son signal (SS, SS1, SS2) de capteur, un signal d'image, qui peut indiquer un objet dans une section de voie du réseau (210) de chemin de fer, et/ou
- le au moins un autre capteur (10, 11, 12, 12') est un capteur de vibration, un capteur infrarouge ou un capteur radar ou a un capteur de ce genre, qui produit, comme son signal (SS, SS1, SS2) de capteur, un signal de sortie, qui peut indiquer un objet dans la section de voie du réseau (210) de chemin de fer.

9. Procédé suivant l'une des revendications précédentes,
dans lequel
le premier système et le deuxième système (21, 22) pouvant subir un apprentissage sont des réseaux neuronaux.

10. Procédé suivant l'une des revendications précédentes,
dans lequel
on produit, par le dispositif (30) d'analyse, comme signal (ST) d'état, un signal d'alerte, si le premier signal (Hi1) auxiliaire confirme la présence de la propriété (E) et le deuxième signal (Hi2) auxiliaire confirme la non présence de la propriété (E), ou si le premier signal (Hi1) auxiliaire ne confirme pas la présence de la propriété (E) et le deuxième signal (Hi2) auxiliaire ne confirme pas non plus la non présence de la propriété (E).

11. Dispositif (100) de production d'un signal (ST) d'état sur la base d'au moins un signal (SS, SS1, SS2) de capteur d'au moins un capteur (10, 11, 12, 12'),
dans lequel
- le dispositif (100) au premier système (21) pouvant subir un apprentissage, qui
- a subi un apprentissage d'une reconnaissance d'une propriété (E) donnée à l'avance,
- qui est constitué pour contrôler si le signal (SS, SS1, SS2) de capteur du au moins un capteur (10, 11, 12, 12') indique la propriété (E) donnée à l'avance, et
- dans le cas où la propriété (E) est reconnue, produit un premier signal (Hi1) auxiliaire confirmant la propriété (E),
- le dispositif (100) a au moins un deuxième système (22) pouvant subir un apprentissage, qui
- a subi un apprentissage de reconnaissance de la non présence de la propriété (E) donnée à l'avance,
- est constitué pour contrôler si le signal (SS, SS1, SS2) de capteur du au moins un capteur (10, 11, 12, 12') ou si le signal (SS, SS1, SS2) de capteur d'au moins un autre capteur (10, 11, 12, 12'), qui est propre à indiquer la même propriété (E), n'indique pas la propriété (E) donnée à l'avance, et
- dans le cas où la non présence de la propriété (E) est constatée, produit un deuxième signal (Hi2) auxiliaire confirmant la non présence de la propriété (E), et
- le dispositif (100) a un dispositif (30) d'analyse, qui est constitué pour produire un signal (ST) d'état indiquant la présence de la propriété (E), si le premier signal (Hi1) auxiliaire confirme la présence de la propriété (E) et si le deuxième signal (Hi2) auxiliaire ne confirme pas la non présence de la propriété (E), et
pour produire un signal (ST) d'état indiquant la non présence de la propriété (E), si le premier signal (Hi1) auxiliaire ne confirme pas la présence de la propriété (E) et si le deuxième signal (Hi2) auxiliaire confirme la non présence de la propriété (E).

12. Dispositif (100) suivant la revendication 11,
dans lequel
le dispositif (100) forme un dispositif de contrôle de voie et/ou le premier et le deuxième système (21, 22) pouvant subir un apprentissage sont des réseaux neuronaux.

13. Dispositif (100) suivant l'une des revendications 11 à 12 précédentes,
dans lequel
- le dispositif (100) est un dispositif (110) d'ordinateur et a une mémoire (120) et
- dans la mémoire (120) sont mis en mémoire un premier, deuxième et troisième modules (SW21, SW22, SW30) de logiciel qui, lors de la réalisation par le dispositif (110) d'ordinateur, forment le premier et le deuxième systèmes (21, 22) pouvant subir un apprentissage et le dispositif (30) d'analyse.

14. Véhicule, notamment véhicule (200) ferroviaire,
dans lequel
- le dispositif a un dispositif (100) suivant l'une des revendications 11 à 13 précédentes,
- le dispositif (100) contrôle une section de voie se trouvant devant ou derrière le véhicule sur le point de savoir si un objet est présent dans la section de voie, et
- la propriété (E) donnée à l'avance concerne la présence de l'objet dans la section de voie, et la section de voie est considérée, comme ayant la propriété (E) donnée à l'avance, si un objet est reconnu dans la section de voie.

15. Produit (CPP) de programme d'ordinateur, notamment pour un dispositif (100) suivant la revendication 13,
dans lequel
le produit (CPP) de programme d'ordinateur a des modules (SW21, SW22, SW30) de logiciel qui, lors de la réalisation par un dispositif (110) d'ordinateur, forment un premier et un deuxième systèmes (21, 22) pouvant subir un apprentissage et un dispositif (30) d'analyse, qui est propre à analyser des signaux (SS, SS1, SS2) de capteur suivant l'une des revendications 1 à 10 précédentes.
